Europäisches Patentamt

European Patent Office

Office européen des brevets

(11) Veröffentlichungsnummer: **0 328 138**

**A2**

(12) **EUROPÄISCHE PATENTANMELDUNG**

(21) Anmeldenummer: 89102351.7

(22) Anmeldetag: 10.02.89

(51) Int. Cl.⁴: **F16L 11/00 , F16L 11/16**

(30) Priorität: 11.02.88 DE 3804208

(43) Veröffentlichungstag der Anmeldung:
16.08.89 Patentblatt 89/33

(84) Benannte Vertragsstaaten:
CH FR GB IT LI NL SE

(71) Anmelder: HILLE & MÜLLER
METALLVERARBEITUNG Werk Hilchenbach

D-5912 Hilchenbach(DE)

(72) Erfinder: Brodowski, Erwin, Dipl.-Ing.
Dicke Buche 29
D-5910 Kreuztal 5(DE)
Erfinder: Klein, Martin
Erzebachstrasse 2
D-5910 Kreuztal-Fellinghausen(DE)

(74) Vertreter: Sperling, Rüdiger, Dipl.-Ing. et al
Patentanwälte Dipl.Ing.S. Staeger
Dipl.Ing.Dipl.Wirtsch.Ing. R Sperling
Müllerstrasse 31
D-8000 München 5(DE)

(54) Metallschlauchanordnung, insbesondere Wickel- oder Wellschlauchanordnung für Kraftfahrzeugabgasleitungen.

(57) Bei einer Metallschlauchanordnung, insbesondere einem Wickeloder Wellschlauch für Kraftfahrzeugabgasleitungen sind übereinander zwei Schläuche angeordnet und an ihren beiden Enden zusammengehalten.

FIG. 1

STRÖMUNGSRICHTUNG

EP 0 328 138 A2

## Metallschlauchanordnung, insbesondere Wickel- oder Wellschlauchanordnung für Kraftfahrzeugabgasleitungen

Die Erfindung bezieht sich auf eine Metallschlauchanordnung, insbesondere Wickel- oder Wellschlauch für Kraftfahrzeugabgasleitungen.

Es ist bekannt, für Kraftfahrzeugabgasleitungen Wickel- oder Metallschläuche bzw. -rohre zu verwenden. Diese sind im wesentlichen abgedichtet, mit Endverbindungen einerseits an den Motor und andererseits an die Abgasleitungen angebaut oder in die Abgasleitung integriert.

Während auf der einen Seite Wickel- oder Wellschläuche zwar eine ausreichende Biegefähigkeit und statische Haltbarkeit aufweisen, entsprechen derartige Schläuche auch bei einer komplizierteren Profilform nicht voll den neuesten Anforderungen betreffende Dichtigkeit. Es werden zwar auf der anderen Seite auch Metallwellrohre für Abgasleitungen verwendet; jedoch weisen derartige Rohre - sofern sie ausreichend dicht sind - nicht die notwendige Biegsamkeit auf. Ihre Einsatzmöglichkeit ist daher sehr beschränkt, zumal bekannterweise durch die elastische Lagerung des Motors relativ hohe Schwingungen zwischen Motor und Abgasleitungen entstehen.

Der Erfindung liegt die Aufgabe zugrunde, eine Metallschlauchanordnung, insbesondere für Kraftfahrzeugabgasleitungen zu schaffen, die einerseits den statischen Anforderungen und andererseits den Dichtungsanforderungen gerecht wird, wobei der konstruktive Aufwand relativ gering gehalten werden soll.

Die Aufgabe wird dadurch gelöst, daß erfindungsgemäß übereinander zwei Schläuche angeordnet und an ihren beiden Enden zusammengehalten sind. Die beiden Schläuche sind voneinander beabstandet; der Abstand kann einige Millimeter betragen. Der auf diese Weise erhaltene Doppelschlauch kann so ausgebildet werden, daß jeweils einem Schlauch die gewünschten Eigenschaften zugeordnet werden, so daß die Kombination der beiden Schläuche ein Optimum an Wirkung erbringt.

Nach einer bevorzugten Ausführungsform der Erfindung entspricht mindestens ein Schlauch den statischen Erfordernissen; es kann auch mindestens ein Schlauch den dichtenden Anforderungen entsprechen.

Es liegt auf der Hand, daß eine besonders zweckmäßige Ausführungsform darin zu sehen ist, daß der innere Schlauch den statischen und der äußere den dichtenden Anforderungen entspricht. Es liegt auf der Hand, daß für die einzelnen Schläuche alle bekannten Profile Verwendung finden können, sofern ihre Eigenschaften dem gewünschten Zweck entsprechen. Zweckmäßigerweise weist ein Schlauch ein Agraffprofil auf und der andere Schlauch ist in Rohrform ausgebildet; bei der üblicherweise gewählten Wellform kann so vorgegangen werden, daß ein relativ dünnes Material Verwendung findet, weil das Rohr praktisch keine statischen Bedingungen zu erfüllen hat. Ein derartig kombiniertes Doppelrohr dürfte bei einer Leckrate 0 überall in Abgasleitungen unabhängig von der Fahrzeuggröße verwendet werden können.

Auf der anderen Seite ist es auch möglich, daß beide Schläuche ein Agraffprofil aufweisen oder daß mindestens ein Schlauch ein eingehaktes Profil aufweist. Für eine derarige Schlauchkombination, für die wohl eine 100%-ige Dichtung nicht erreicht werden kann, gilt, daß aber auf der anderen Seite die statischen Erfordernisse beträchtlich erhöht werden. Bevorzugterweise nimmt mindestens eine Endverbindung die freien Enden der Schläuche übereinander abgedichtet auf.

Als Halterung für mindestens einen Schlauch in oder an der Endverbindung kann ein dem freien Rand des Schlauches oder Rohres angepaßter Metallring vorgesehen sein. Es ist ausdrücklich darauf hinzuweisen, daß dieser Metallring auch bei anders gestalteten Endverbindungen benutzt werden kann, insbesondere bei solchen, mit denen nur ein einziger Schlauch gehalten werden soll.

Auf der Zeichnung sind beispielsweise Ausführungsformen der Erfindung dargestellt: sie werden nachfolgend näher beschrieben; es zeigt:

Fig. 1 eine Draufsicht auf eine Ausführungsform der Erfindung.

Fig. 2 eine Detail 2 von Fig. 1,

Fig. 3 eine Draufsicht auf eine abgewandelte Ausführungsform der Erfindung,

Fig. 4 eine Detail 4 von Fig. 3, und

Fig. 5 ein Detail einer abgewandelten Ausführungsform für eine Endverbindung.

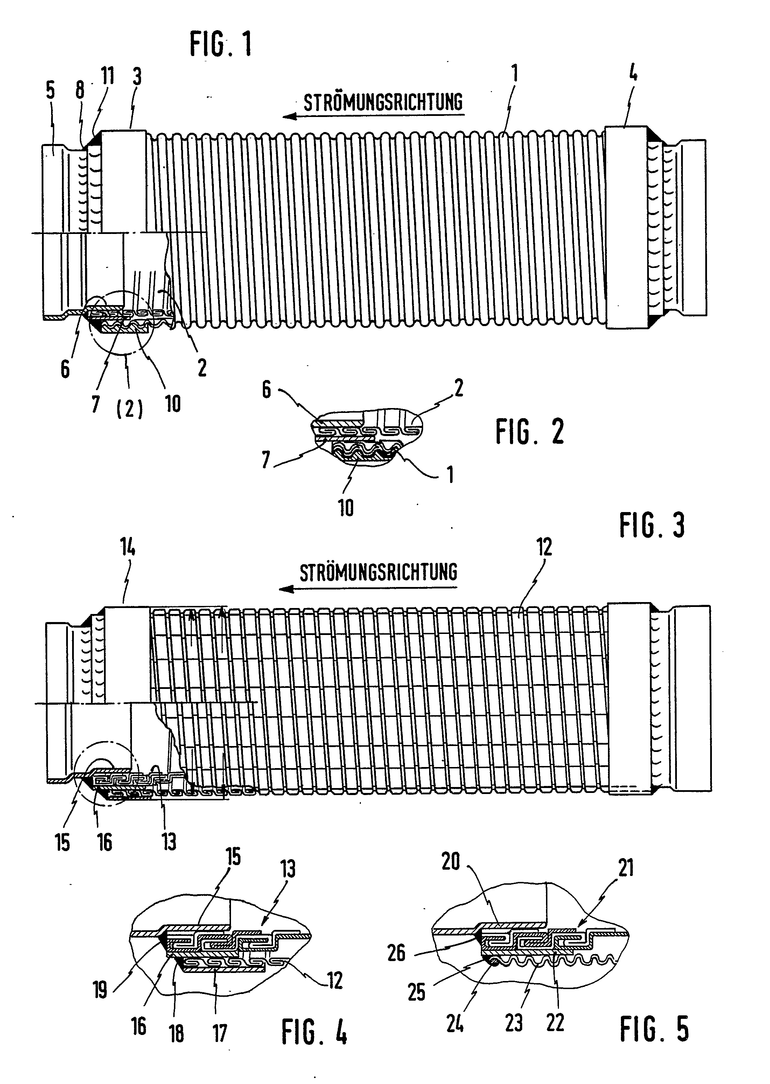

Die in Fig. 1 dargestellte Ausführungsform einer Abgasschlauchanordnung besteht aus einem äußeren Wickelwell schlauch oder vornehmlich einem Metallrohr, welches mit einem Abstand von etwa 5 mm einen inneren Schlauch 2 umgibt, der, wie insbesondere aus Fig. 2 ersichtlich ist, ein Agraffprofil aufweist. Während dem relativ dünnen Wellmetallrohr 1 die Dichtung zugeordnet wird, da es eine Leckrate gleich Null aufweist, ist der innere Schlauch 2 den statischen Erfordernissen angepaßt.

Der Doppelschlauch weist die für Abgasleitungen erforderliche Biegsamkeit auf; der innere Schlauch 2 mit einem Agraffprofil erfüllt die statischen Erfordernisse. Bei dem Zusammensetzen der Metallschlauchanordnung bzw. beim Befestigen an den beiden Endverbindungen 3 bzw. 4 ist darauf zu achten, daß das Agraffprofil bzw. der innere Schlauch so eingesetzt wird, daß auch bei Biegungen das Wellrohr 1 im elastischen Bereich bleibt und seine Dichteigenschaft nicht verliert.

Die Endverbindung 3 besteht bei der dargestellten Ausführungsform aus einer Anschlußmuffe 5, welche mit ihrem zylindrischen Endabschnitt 6 in das Agraffprofil 2 eingreift und dieses von innen hält. Über den Wellschlauch 2 wird eine zylindrische Muffe 7 geschoben, die mittels einer Schweißnaht 8 mit dem Teil 5 verbunden wird. Das Agraffprofil bzw. der Innenschlauch 3 wird durch Pressen der beiden annähernd parallel zueinander verlaufenden zylindrischen Abschnitte gehalten.

Auf die Muffe 7 wird das Wellrohr 1 aufgeschoben, welches wiederum durch einen Ring in Wirkstellung gehalten wird. Der Ring 10 weist ein Innengewinde auf, sofern der äußere Schlauch als Wikkelschlauch ausgebildet ist. Auf der anderen Seite kann er Rippen, die parallel zueinander verlaufen, aufweisen, wenn es sich um ein Wellrohr handelt. In jedem Fall wird durch die Wellungen des Ringes 10 der äußere Schlauch gehalten.

Der Ring 10 ist, wie dargestellt, durch eine Schweißnaht 11 mit der Endverbindung verbunden. Am anderem freien Ende der Metallschlauchanordnung ist spiegelbildgleich dieselbe Konstruktion der Endverbindung vorgesehen.

Bei der in Fig. 3 und 4 dargestellten Ausführungsform weist der äußere Schlauch 12 eine Agraffprofil auf, während der innere Schlauch 13 ein verstärktes Agraffprofil hat.

Die Endverbindung 14 besteht wiederum aus einer Anschlußmuffe mit einem zylindrischen Abschnitt 15, auf welchem das Agraffprofil 13 mittels eines Ringes 16 im Preßsitz gehalten wird. Auch das Agraffprofil 12, also der äußere Schlauch, ist im vorliegenden Fall durch einen Ring 17 im Preßsitz auf dem Ring 16 gehalten. Beide Ringe sind durch ringförmige Schweißnähte 18 bzw. 19 mit der Endverbindung fest verbunden.

Bei der Ausführungsform nach Fig. 5 handelt es sich um eine abgewandelte Endverbindung, die auch dann Verwendung finden kann, wenn nur ein einziger Schlauch gehalten werden soll. Diese Ausführungsform wird jedoch als Halterung für zwei übereinanderliegende Schläuche beschrieben.

Auf den zylindrischen Abschnitt 20 der Anschlußmuffe ist ein verstärktes Agraffprofil 21 als innerer Schlauch aufgesetzt und über einen zylindrischen Ring 22 im Preßsitz gehalten.

Der äußere Schlauch 23 - im vorliegenden Fall als Wellrohr ausgebildet - ist an seinem freien Rand mit einem runden Metallring 24 umgeben, welcher mittels einer Schweißnaht 25 mit dem zylindrischen Ring 22 verbunden ist. Eine Schweißnaht 26 hält den zylindrischen Ring mit der Anschlußmuffe zusammen.

Die erfindungsgemäße Metallschlauchanordnung, die insbesondere für Kraftfahrzeugabgasleitungen geeignet ist, kann auch für ähnliche Zwecke Verwendung finden. Sofern z.B. eine Schalldämmung vorgesehen sein soll, ist es möglich, den Zwischenraum zwischen den beiden Schläuchen mit einem schalldämmenden Material, z.B. einem Ersatzstoff für Asbest oder Steinwolle auszufüllen. Es liegt auf der Hand,"daß die Anschlußverbindungen anders ausgebildet sein können und den tatsächlichen konstruktiven Anforderungen angepaßt werden; auch ist es möglich, daß in die Endverbindung Flammrohre, Dämpfelemente oder dergl. hineinragen. Die Metallschlauchanordnung - sofern sie natürlich für Abgaszwecke Verwendung findet - muß darüberhinaus entsprechend hitzebeständig sein, die Wahl des Herstellungsmaterials hat entsprechend zu erfolgen.

## Ansprüche

1. Metallschlauchanordnung, insbesondere Wickel- oder Wellschlauch für Kraftfahrzeugabgasleitungen, dadurch **gekennzeichnet,** daß übereinander zwei Schläuche angeordnet und an ihren beiden Enden zusammengehalten sind.

2. Metallschlauchanordnung nach Anspruch 1, dadurch **gekennzeichnet,** daß mindestens ein Schlauch den statischen Erfordernissen entspricht.

3. Metallschlauchanordnung nach Anspruch 1 oder 2, dadurch **gekennzeichnet,** daß mindestens ein Schlauch den dichtenden Anforderungen entspricht.

4. Metallschlauchanordnung nach einem oder mehreren der Ansprüche 1 bis 3, dadurch **gekennzeichnet,** daß der innere Schlauch den statischen und der äußere den dichtenden Anforderungen entspricht.

5. Metallschlauchanordnung nach einem oder mehrerer der Ansprüche 1 bis 4, dadurch **gekennzeichnet,** daß ein Schlauch ein Agraffprofil aufweist und der andere Schlauch in Rohrform ausgebildet ist.

6. Metallschlauchanordnung nach einem oder mehreren der Ansprüche 1 bis 4, dadurch **gekennzeichnet,** daß beide Schläuche ein Agraffprofil aufweisen.

7. Metallschlauchanordnung nach einem der Ansprüche 1 bis 4, dadurch **gekennzeichnet,** daß mindestens ein Schlauch ein eingehaktes Profil aufweist

8. Metallschlauchanordnung nach einem der Ansprüche 1 bis 1, dadurch **gekennzeichnet,** daß mindestens eine Endverbindung die freien Ende der Schläuche übereinander abgedichtet aufnimmt.

9. Metallschlauchanordnung insbesondere nach Anspruch 8, dadurch **gekennzeichnet,** daß als Halterung für einen Schlauch in oder an der Endverbindung eine dem freien Rand des Schlauches oder Rohres angepaßter Metallring vorgesehen ist.

# FIG. 1

STRÖMUNGSRICHTUNG

# FIG. 2

# FIG. 3

STRÖMUNGSRICHTUNG

# FIG. 4

# FIG. 5